# EUROPÄISCHE PATENTSCHRIFT

(11) **EP 3 192 575 B1**
(45) Veröffentlichungstag und Bekanntmachung des Hinweises auf die Patenterteilung: **04.09.2019**
(21) Anmeldenummer: 16203080.3
(22) Anmeldetag: 09.12.2016
(51) Int. Cl.: A63H 17/26, B60B 37/10

(54) **DREHEINRICHTUNGS-BAUGRUPPE FÜR EIN SPIELZEUG**
ROTATION MODULE FOR A TOY
MODULE DE DISPOSITIF DE ROTATION POUR UN JOUET

(30) Priorität: 14.01.2016 DE 102016200354
(43) Veröffentlichungstag der Anmeldung: 19.07.2017
(73) Patentinhaber: Bruder Spielwaren GmbH + Co. KG, 90768 Fürth (DE)
(72) Erfinder: Bruder, Paul Heinz, 90768 Fürth (DE)
(74) Vertreter: Rau, Schneck & Hübner Patentanwälte Rechtsanwälte PartGmbB

(56) Entgegenhaltungen:
- WO-A1-93/08887
- WO-A2-01/36063
- CN-U- 204 840 929
- DE-A1-102013 006 372
- DE-U1- 29 800 211
- US-A- 4 299 051

## Beschreibung

Die Erfindung betrifft eine Dreheinrichtungs-Baugruppe für ein Spielzeug gemäß dem Oberbegriff des Anspruchs 1.

Dreheinrichtungs-Baugruppen für Spielzeuge sind beispielsweise als Räder, Rollen oder sonstige Rotoren vom Markt her bekannt. Die US 2,634,168 beschreibt ein Rad eines Flugzeugmodells mit einer drehbaren Nabe und einem hiermit verschraubten Felgenteil.

Aus der WO 93/08887 A1 ist ein gattungsgemäßes Schraubteil für ein Spielzeug bekannt. Die DE 298 00 211 U1 offenbart eine Zwillingsrad-Anordnung für ein Spielfahrzeug. Aus der DE 10 2013 006 372 A1 ist eine Befestigungsvorrichtung für ein Ersatzrad eines Fahrzeugs bekannt. Die WO 01/36063 A2 offenbart ein Spielfahrzeug mit wechselbaren Rädern. Aus der US 4,299,051 ist ein Rad für ein Spielfahrzeug bekannt. Die CN 204840929 U offenbart einen zweiteiligen Reifen.

Es ist eine Aufgabe der vorliegenden Erfindung, eine derartige Dreheinrichtungs-Baugruppe zur Spielerlebnissteigerung demontierbar zu gestalten, wobei dies mit geringem Herstellungs- und Montageaufwand für die Dreheinrichtungs-Baugruppe einhergehen soll.

Diese Aufgabe ist erfindungsgemäß gelöst durch eine Dreheinrichtungs-Baugruppe mit den in Anspruch 1 angegebenen Merkmalen.

Bei dem Scheibenteil kann es sich um eine Radfelge, um eine Rolle, beispielsweise um eine Seilrolle, oder um ein sonstiges Rotorteil handeln. Die drehfeste Schraubverbindung des Nabenteils mit dem Scheibenteil ist erfindungsgemäß ohne ein zusätzliches Befestigungselement, insbesondere ohne eine zusätzliche Mutter möglich. Das Innengewinde kann am Scheibenteil angeformt sein. Das Außengewinde kann am Nabenteil angeformt sein. Das Innengewinde hat höchstens einen Gewindegang. Ein derartiges Innengewinde hat eine Umfangserstreckung von höchstens 360°. Bei einer solchen Ausführung kann das Scheibenteil als einfach entformbares Spritzguss-Kunststoffteil gestaltet werden. Die Umfangserstreckung des Innengewindes kann kleiner sein als 360° und beispielsweise 350° betragen.

Eine Anlagefläche nach Anspruch 2 kann als Positionierhilfe beim Aufsetzen des Scheibenteils auf das Nabenteil bei der Montage dienen. Dies macht die Montage insbesondere für Kinder einfacher.

Eine drehbare Verbindung des Nabenteils mit der Achsenkomponente nach Anspruch 3 ermöglicht es, das Nabenteil relativ zur Achsenkomponente zu drehen. Auch bei feststehender Achse ist dann ein Verdrehen des Nabenteils zum Befestigen oder Lösen des Scheibenteils möglich. Bei einem Nabenteil einer Fahrzeugnabe ergibt sich zudem ein erwünschter Differenzialeffekt.

Bei einer Ausführung der Gewindeverbindung als Linksgewinde nach Anspruch 4 kann beim Verschrauben das innere Nabenteil relativ zum feststehenden äußeren Scheibenteil gedreht werden, wobei das Linksgewinde dafür sorgt, dass trotzdem ein intuitiv erfolgendes Drehen des Nabenteils im Uhrzeigersinn zum Festschrauben des Nabenteils am Scheibenteil führt.

Eine Mehrzahl von Gewindesegmenten nach Anspruch 5 erleichtert das Verschrauben der Gewindekomponenten der Gewindeverbindung.

Eine Anlagefläche nach Anspruch 6 spart Material. Zudem können die Anlageflächensegmente in Umfangsrichtung auf Lücke mit Gewindesegmenten des Außengewindes gestaltet sein. Dies ermöglicht es, das Nabenteil als einfach entformbares Spritzguss-Kunststoffteil auszubilden.

Die Vorteile eines Spielzeugs nach Anspruch 7 entsprechen denen, die vorstehend unter Bezugnahme auf die Dreheinrichtungs-Baugruppe erläutert wurden. Bei dem Spielzeug kann es sich um ein Spielfahrzeug handeln.

Entsprechende Vorteile hat eine Montage-Baugruppe nach Anspruch 8. Der Einsatz des Steckschlüssels ermöglicht es, das Nabenteil ohne Drehbetätigungselement auszuführen, sodass das Nabenteil realistisch, einem realen Vorbild angenähert, gestaltet sein kann. Alternativ kann am Nabenteil zum Beispiel ein Flügelaufsatz zur Drehbetätigung angeformt sein. In diesem Fall kann auf einen Steckschlüssel auch verzichtet werden.

Ein Steckschlüssel nach Anspruch 9 führt zu den Vorteilen, die vorstehend unter Bezugnahme auf die Montage-Baugruppe bereits erläutert wurden.

Ausführungsbeispiele der Erfindung werden nachfolgend anhand der Zeichnung näher erläutert. In dieser zeigen:
- Fig. 1: in einer Explosionsdarstellung eine Montage-Baugruppe mit einer Dreheinrichtungs-Baugruppe für ein Spielzeug und mit einem Steckschlüssel zur Montage der Dreheinrichtungs-Baugruppe;
- Fig. 2: in einer zu Fig. 1 ähnlichen Darstellung eine weitere Aufführung einer Montage-Baugruppe mit einer Dreheinrichtungs-Baugruppe für ein Spielzeug und einen Steckschlüssel;
- Fig. 3: in einem perspektivischen Schnitt eine weitere Ausführung einer Dreheinrichtungs-Baugruppe für ein Spielzeug, bei der ein Nabenteil mit einem als Radfelge ausgeführten Scheibenteil drehfest verbunden ist; und
- Fig. 4: die Dreheinrichtungs-Baugruppe nach Fig. 3, bei der das Nabenteil vom Scheibenteil gelöst ist und bei der das Scheibenteil in einem Axialschnitt und das Nabenteil in einer Seitenansicht gezeigt ist.

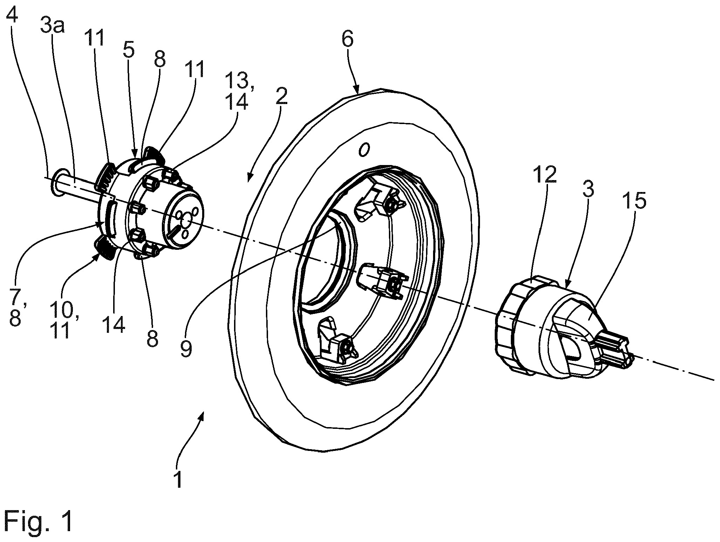

Eine in der Fig. 1 insgesamt dargstellte Montage-Baugruppe 1 ist Bestandteil eines Spielzeugs, beispielsweise eines Spielfahrzeugs. Die Montage-Baugruppe 1 hat eine Dreheinrichtungs-Baugruppe 2 und einen Steckschlüssel 3.

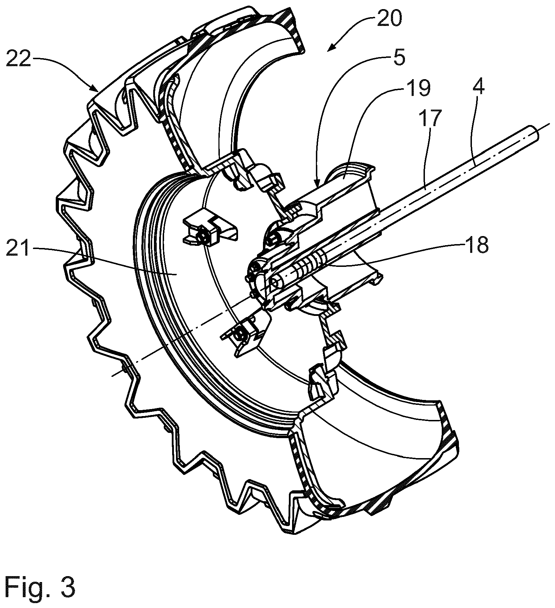

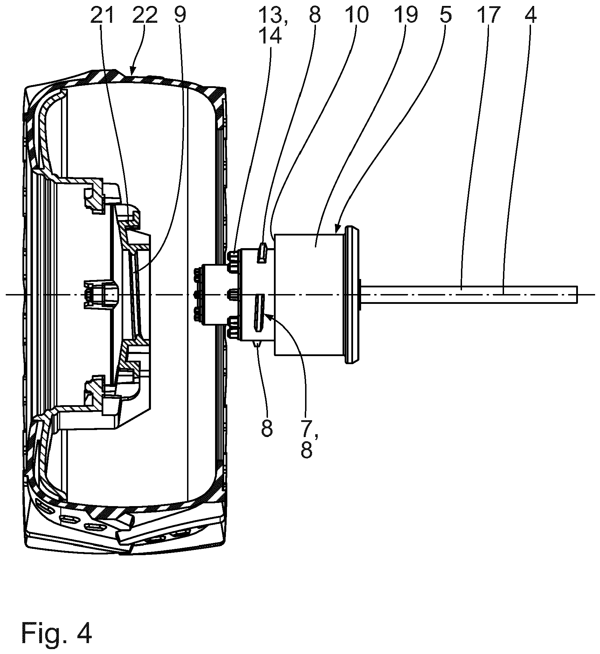

Die Dreheinrichtungs-Baugruppe 2 hat eine Achsenkomponente 3a, die eine Drehachse der Dreheinrichtungs-Baugruppe 2 vorgibt. Zudem hat die Dreheinrichtungs-Baugruppe 2 ein Nabenteil 5, das mit der Achsenkomponente 3a verbunden ist, und ein Scheibenteil 6. Beim Scheibenteil 6 kann es sich beispielsweise um eine Radfelge handeln, was nachfolgend insbesondere Bezug nehmend auf die Fig. 3 und 4 noch näher erläutert wird, oder um eine andere drehbare Spielzeugkomponente, beispielsweise um ein Rotorelement oder um ein Rollen-Element, beispielsweise das Rollenteil einer Seilrolle. Das Scheibenteil 6 ist über eine Gewindeverbindung drehfest mit dem Nabenteil 5 verschraubbar.

Diese Gewindeverbindung umfasst ein Außengewinde 7, welches Bestandteil des Nabenteils 5 ist. Das Außengewinde 7 ist als Mehrzahl von voneinander in Umfangsrichtung um die Drehachse 4 beabstandeten Gewindesegmenten 8 ausgeführt. Weiterhin hat die Gewindeverbindung ein zum Außengewinde 7 komplementäres Innengewinde 9, welches Bestandteil des Scheibenteils 6 ist. Das Außengewinde 7 ist am Nabenteil 5 angeformt. Das Innengewinde 9 ist am Scheibenteil 6 angeformt.

Das Innengewinde 9 hat lediglich einen Gewindegang, der sich um höchstens 360° um die Drehachse 4 erstreckt. Bei der Ausführung nach Fig. 1 ist diese Umfangserstreckung des Innengewindes 9 kleiner als 360°, wodurch das Scheibenteil 6 insgesamt als einfach entformbares Spritzguss-Kunststoffteil fertigbar ist.

Das Nabenteil 5 hat weiterhin eine Anlagefläche 10 als Widerlager des verschraubten Scheibenteils 6 auf. Bei noch nicht verschraubtem Scheibenteil 6 dient die Anlagefläche 10 zur Positionierung des Scheibenteils 6 am Nabenteil 5.

Die Anlagefläche 10 umfasst eine Mehrzahl von voneinander in Umfangsrichtung um die Drehachse 4 beabstandeten Anlageflächensegmenten 11. In Umfangsrichtung gesehen sind die Anlageflächensegmente 11 auf Lücke mit den Gewindesegmenten 8 angeordnet. Dies begünstigt ein Entformen des Nabenteils 5 bei der Ausführung als Spritzguss-Kunststoffteil.

Die Gewindeverbindung mit dem Außengewinde 7 und dem hierzu komplementären Innengewinde 9 ist als Linksgewinde ausgeführt.

Der Streckschlüssel 3 hat eine Steckschlüssel-Umfangskontur 12, die komplementär zu einer Gegenschlüssel-Kontur 13 des Nabenteils 5 ausgeführt ist. Hierzu hat die Steckschlüssel-Umfangskontur 12 eine Mehrzahl von Auswölbungen, die komplementär zu Mutter-Attrappen 14 gestaltet sind, die wiederum am Nabenteil 5 angeformt sind.

Zur Montage der Dreheinrichtungs-Baugruppe wird das Scheibenteil 6 auf das Nabenteil 5 aufgesetzt, sodass das Innengewinde 9 des Scheibenteils 6 in Anlage mit den Gewindesegmenten 8 des Außengewindes 7 des Nabenteils 5 gelangt. Hierbei dienen die Anlageflächensegmente 11, an denen das Scheibenteil 6 stirnseitig zu liegen kommt, als Positionierungshilfe. Anschließend wird der Steckschlüssel 3 auf das Nabenteil 5 aufgesetzt, wobei die Steckschlüssel-Umfangskontur 12 die Gegenschlüssel-Kontur 13 des Nabenteils 5 formschlüssig übergreift. Nun wird der Steckschlüssel 3 im Uhrzeigersinn gedreht, wobei ein Betätigungsflügel 15 des Steckschlüssel 3 von der Bedienperson zwischen Daumen und Zeigefinger erfasst wird. Bei dieser Drehbetätigung des Steckschlüssels 3 wird das Nabenteil 5 im Uhrzeigersinn relativ zum festgehaltenen Scheibenteil 6 gedreht. Die Linksgewinde-Gestaltung der Gewindeverbindung sorgt nun dafür, dass das Außengewinde 7 des Nabenteils 5 mit dem Innengewinde 9 des Scheibenteils 6 in Eingriff gelangt. Das Scheibenteil 6 wird bei festgezogener Gewindeverbindung 7, 9 formschlüssig zwischen den Gewindesegmenten 8 und den Anlageflächensegmenten 11 gehalten beziehungsweise geklemmt. Hierdurch ist eine sichere und drehfeste Verbindung zwischen dem Nabenteil 5 und dem Scheibenteil 6 gegeben. Der Steckschlüssel 3 kann dann abgezogen werden. Eine zusätzliche Befestigungsmutter ist nicht erforderlich.

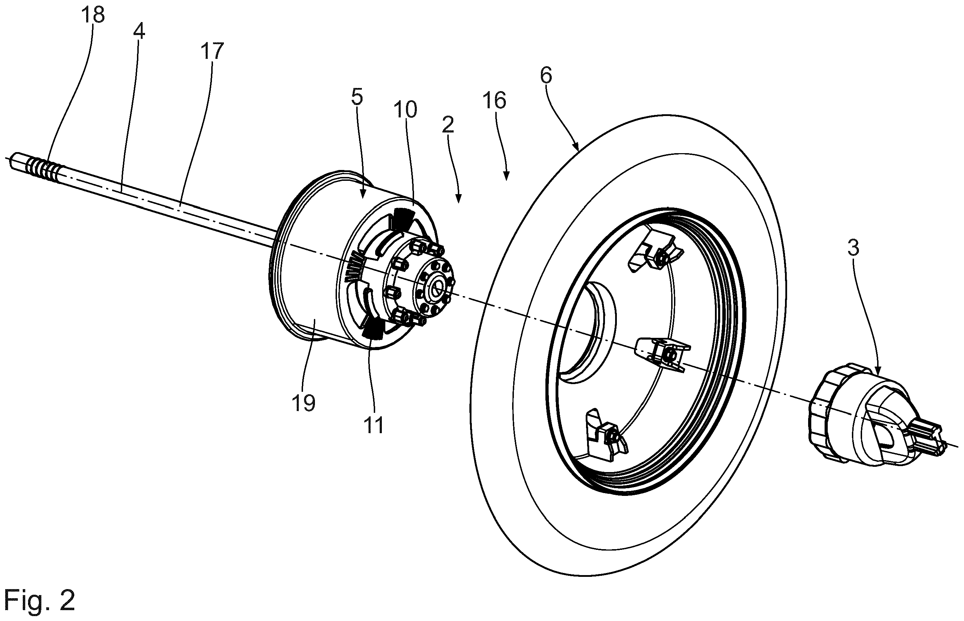

Anhand der Fig. 2 wird nachfolgend eine weitere Ausführung einer Montage-Baugruppe 16 erläutert. Komponenten und Funktionen, die denjenigen entsprechen, die vorstehend unter Bezugnahme auf die Fig. 1 bereits erläutert wurden, tragen die gleichen Bezugsziffern und werden nicht nochmals im Einzelnen diskutiert.

Die Montage-Baugruppe 16 hat wiederum ein Nabenteil 5 und ein Scheibenteil 6.

Das Nabenteil 5 ist bei der Montage-Baugruppe 16 drehbar mit einer Achsenkomponente 17 verbunden, die als Starrachse ausgeführt sein kann. Diese drehbare Verbindung der Achsenkomponente 17 mit dem Nabenteil 5 der Dreheinrichtungs-Baugruppe 2 nach Fig. 2 ist innerhalb eines Presssitzes der Achsenkomponente 17 im Nabenteil 5 ausgeführt. Diese drehbare Verbindung ist ermöglicht durch eine axiale Profilierung 18 der Achsenkomponente 17, die als Sägezahn-Profilierung ausgeführt ist. Die Fig. 2 zeigt diese Profilierung 18 für ein zweites Nabenteil 5, welches identisch zum dargestellten Nabenteil 5 ausgeführt ist und gegengleich auf die Achsenkomponente 17 von der anderen Seite her als Teil einer weiteren Dreheinrichtungs-Baugruppe aufsteckt wird. Aufgrund der Profilierung 18 kann sich das jeweilige Nabenteil 15 relativ zur Achsenkomponente 17 um die Drehachse 4 drehen.

Die Anlagefläche 10 ist bei der Dreheinrichtungs-Baugruppe 2 nach Fig. 2 als Bestandteil einer Deckenwand eines Nabentopfes 19 des Nabenteils 5 ausgeführt.

Anhand der Fig. 3 und 4 wird nachfolgend eine weitere Ausführung einer Dreheinrichtungs-Baugruppe 20 erläutert. Komponenten und Funktionen, die denjenigen entsprechen, die vorstehend unter Bezugnahme auf die Fig. 1 und 2 bereits erläutert wurden, tragen die gleichen Bezugsziffern und werden nicht nochmals im Einzelnen diskutiert.

Bei der Dreheinrichtungs-Baugruppe 20 ist das Scheibenteil als Radfelge 21 eines Spielfahrzeug-Rades 22 ausgeführt.

Auch für die Dreheinrichtungs-Baugruppe 20 ist ein Steckschlüssel nach Art des Steckschlüssels 3 einsetzbar.

Bei dem Spielzeug, dessen Bestandteil das Spielfahrzeug-Rad 22 ist, kann es sich um einen Traktor, um einen Lastwagen, um ein Kranfahrzeug oder auch um ein anderes Fahrzeug, beispielsweise einen Anhänger, handeln.

Die gesamte Montage-Baugruppe 1, 16 sowie die Dreheinrichtungs-Baugruppe 2, 20 kann ausschließlich mit Kunststoffkomponenten gefertigt sein.

## Patentansprüche

1. Dreheinrichtungs-Baugruppe (2; 20) für ein Spielzeug,
- mit einer Achsenkomponente (3a; 17), die eine Drehachse (4) der Dreheinrichtungs-Baugruppe (2; 20) vorgibt,
- mit einem Nabenteil (5), das mit der Achsenkomponente (3a; 17) verbunden ist, und
- mit einem Scheibenteil (6; 21), das über eine Gewindeverbindung drehfest mit dem Nabenteil (5) verschraubbar ist,
- wobei das Nabenteil (5) ein Außengewinde (7) der Gewindeverbindung aufweist,
- wobei das Scheibenteil (6; 21) ein zum Außengewinde (7) komplementäres Innengewinde (9) der Gewindeverbindung aufweist,
- wobei das Innengewinde (9) höchstens einen Gewindegang aufweist,
**dadurch gekennzeichnet, dass**
es sich bei dem Scheibenteil (6; 21) um ein Rotorteil handelt.

2. Dreheinrichtungs-Baugruppe nach Anspruch 1, **dadurch gekennzeichnet, dass** das Nabenteil (5) mindestens eine Anlagefläche (10) als Widerlager des verschraubten Scheibenteils (6; 21) aufweist.

3. Dreheinrichtungs-Baugruppe nach Anspruch 1 oder 2, **dadurch gekennzeichnet, dass** das Nabenteil (5) drehbar mit der Achsenkomponente (17) verbunden ist.

4. Dreheinrichtungs-Baugruppe nach einem der Ansprüche 1 bis 3, **dadurch gekennzeichnet, dass** die Gewindeverbindung als Linksgewinde ausgeführt ist.

5. Dreheinrichtungs-Baugruppe nach einem der Ansprüche 1 bis 4, **dadurch gekennzeichnet, dass** das Außengewinde (7) als Mehrzahl von voneinander in Umfangsrichtung um die Drehachse (4) beabstandeten Gewindesegmenten (8) ausgebildet ist.

6. Dreheinrichtungs-Baugruppe nach einem der Ansprüche 2 bis 5, **dadurch gekennzeichnet, dass** die Anlagefläche (10) eine Mehrzahl von voneinander in Umfangsrichtung um die Drehachse (4) beabstandeten Anlageflächensegmenten (11) aufweist.

7. Spielzeug mit einer Dreheinrichtungs-Baugruppe nach einem der Ansprüche 1 bis 6.

8. Montage-Baugruppe (1; 16)
- mit einer Dreheinrichtungs-Baugruppe nach einem der Ansprüche 1 bis 6, und
- mit einem Steckschlüssel (3), der eine Steckschlüssel-Umfangskontur (12) aufweist, die komplementär zu einer Gegenschlüssel-Kontur (13) des Nabenteils (5) ausgeführt ist.

9. Steckschlüssel (3) für eine Montage-Baugruppe nach Anspruch 8,
- mit einer Steckschlüssel-Umfangskontur (12), die komplementär zu einer Gegenschlüssel-Kontur (13) des Nabenteils (5) ausgeführt ist, und
- mit einem Betätigungsflügel (15) zum Erfassen von einer Bedienperson zwischen Daumen und Zeigefinger.

## Claims

1. Rotating device module (2; 20) for a toy,
- with an axle component (3a; 17), which provides a rotation axis (4) of the rotating device module (2; 20),
- with a hub part (5), which is connected to the axle component (3a; 17),
- with a disc part (6; 21), which can be screwed on by means of a threaded connection to the hub part (5), said connection being torque proof,
- wherein the hub part (5) has an external thread (7) of the threaded connection,
- wherein the disc part (6; 21) has an internal thread (9) of the threaded connection complementary to an external thread (7),
- wherein the internal thread (9) has no more than one thread turn,
**characterised in that**
the disc part (6; 21) is a rotor element.

2. Rotating device module according to claim 1, **characterised in that** the hub part (5) has at least one contact face (10) as an abutment against the screwed disc part (6; 21).

3. Rotating device module according to claim 1 or 2, **characterised in that** the hub part (5) is connected to the axle component (17) to rotate.

4. Rotating device module according to any one of claims 1 to 3, **characterised in that** the threaded connection is designed as a left-hand thread.

5. Rotating device module according to any one of claims 1 to 4, **characterised in that** the external thread (7) is designed as a plurality of thread segments (8) arranged around the rotation axis (4) with gaps between one another in a circumferential direction.

6. Rotating device module according to any one of claims 2 to 5, **characterised in that** the contact face (10) has a plurality of contact face segments (11) arranged around the rotation axis (4) with gaps between one another in a circumferential direction.

7. Toy with a rotating device module according to any one of claims 1 to 6.

8. Assembly module (1; 16)
- with a rotating device module according to any one of claims 1 to 6 and
- with a plug-in tool (3), which has a plug-in tool circumferential contour (12), which is designed to be complementary to a socket contour (13) of the hub part (5).

9. Plug-in tool (3) for an assembly module according to claim 8,
- with a plug-in tool circumferential contour (12), which is designed to be complementary to a socket contour (13) of the hub part (5) and
- with an actuating wing (15) to be grasped by an operating person between thumb and index finger.

## Revendications

1. Ensemble dispositif de rotation (2 ; 20) d'un jouet, comportant
- un composant d'axe (3a ; 17) qui définit un axe de rotation (4) de l'ensemble dispositif de rotation (2 ; 20),
- une partie de moyeu (5) reliée au composant d'axe (3a ; 17), et
- une partie en forme de disque (6 ; 21) pouvant être vissée sur la partie de moyeu (5) de manière fixe en rotation par un raccord fileté,
- la partie de moyeu (5) présentant un filetage extérieur (7) du raccord fileté,
- la partie en forme de disque (6 ; 21) présentant un filetage intérieur (9) du raccord fileté complémentaire au filetage extérieur (7),
- le filetage intérieur (9) présentant au plus un filet, **caractérisé en ce que** la partie en forme de disque (6 ; 21) est une partie rotor.

2. Ensemble dispositif de rotation selon la revendication 1, **caractérisé en ce que** la partie de moyeu (5) présente au moins une surface d'appui (10) comme butée de la partie en forme de disque (6 ; 21) vissée.

3. Ensemble dispositif de rotation selon la revendication 1 ou 2, **caractérisé en ce que** la partie de moyeu (5) est reliée de manière rotative au composant d'axe (17).

4. Ensemble dispositif de rotation selon l'une des revendications 1 à 3, **caractérisé en ce que** le raccord fileté est conçu comme un filetage à gauche.

5. Ensemble dispositif de rotation selon l'une des revendications 1 à 4, **caractérisé en ce que** le filetage extérieur (7) est réalisé sous la forme d'une pluralité de segments de filetage (8) espacés les uns des autres dans la direction circonférentielle autour de l'axe de rotation (4).

6. Ensemble dispositif de rotation selon l'une des revendications 2 à 5, **caractérisé en ce que** la surface d'appui (10) présente une pluralité de segments de surface d'appui (11) espacés les uns des autres dans la direction circonférentielle autour de l'axe de rotation (4).

7. Jouet doté d'un ensemble dispositif de rotation selon l'une des revendications 1 à 6.

8. Ensemble de montage (1 ; 16), comportant
- un ensemble dispositif de rotation selon l'une des revendications 1 à 6, et
- une clé à douille (3) présentant un contour circonférentiel de clé à douille (12), lequel contour est réalisé en complément au contour de contre-clé (13) de la partie de moyeu (5).

9. Clé à douille (3) destinée à un ensemble de montage selon la revendication 8, comportant
- un contour circonférentiel de clé à douille (12) réalisé en complément à un contour de contre-clé (13) de la partie moyeu (5), et
- un étrier d'actionnement (15) destiné à être tenu par un opérateur, entre le pouce et l'index.
